# EUROPÄISCHE PATENTSCHRIFT

(11) **EP 3 531 196 B1**
(45) Veröffentlichungstag und Bekanntmachung des Hinweises auf die Patenterteilung: **16.11.2022**
(21) Anmeldenummer: 19158696.5
(22) Anmeldetag: 21.02.2019
(51) Int. Cl.: G02C 7/10, G02F 1/1333, G02B 5/20, G02B 5/23, G02B 5/24

(54) **VORRICHTUNG ZUR RICHTUNGSABHÄNGIGEN ANPASSUNG DES EINFALLENDEN LICHTS**
DEVICE FOR DIRECTION-DEPENDENT ADAPTATION OF THE INCIDENT LIGHT
DISPOSITIF D'ADAPTATION DE LA LUMIÈRE INCIDENTE EN FONCTION DE LA DIRECTION

(30) Priorität: 23.02.2018 DE 202018000981 U
(43) Veröffentlichungstag der Anmeldung: 28.08.2019
(73) Patentinhaber: Jathe, Markus, 60489 Frankfurt am Main (DE)
(72) Erfinder: Jathe, Adrien, 60489 Frankfurt am Main (DE)
(74) Vertreter: Limbeck, Achim

(56) Entgegenhaltungen:
- EP-A2- 1 760 515
- DE-A1- 3 328 436
- US-A- 5 412 439
- US-A1- 2008 225 402

## Beschreibung

### Technisches Gebiet

Die vorliegende Erfindung betrifft eine Vorrichtung zur richtungsabhängigen Anpassung des einfallenden Lichts gemäß dem Oberbegriff des Patentanspruchs 1.

### Stand der Technik

Heutzutage werden Sonnenbrillen mit verschiedenen Materialien und Methoden verdunkelt. Jedoch egal ob verspiegelte, gefärbte oder polarisierende Sonnenbrillen, alle Sonnenbrillen verdunkeln alle einfallenden Lichtstrahlen um einen bestimmten Faktor. Zur leichteren Unterscheidung werden die Brillen in verschiedenen Klassen eingeteilt. Gemeinsam ist allen jedoch, dass wenn man durch die Sonnenbrillen blickt, sind die relativ dunklen Objekte im Blickfeld meist schwer sichtbar, da das von ihnen ausgehende geringe Licht noch weiter verdunkelt wird. Des Weiteren wird das Licht von hellen Lichtquellen, wie Reflektionen, der Sonne oder von Lampen nur unpassend stark reduziert, sodass man dennoch von deren Lichtstrahlen geblendet wird. In anderen Worten, bei herkömmlichen Sonnenbrillen können bestimmte Lichtquellen nicht automatisch helligkeitsgesteuert progressiv verdunkelt werden. Es existieren zwar selbst tönende Sonnbrillen, jedoch brauchen diese mehrere Minuten, um sich komplett zu verdunkeln oder wieder aufzuhellen.

Um die Augen dennoch vor plötzlichen grellen Lichtblitzen schützen zu können, sind für Schweißer eine Vielzahl kommerzieller Schweißbrillen (sog. Durchsichteinheiten) aus dem Stand der Technik bekannt, die z.B. mit Hilfe eines Aufbaus, bestehend aus Solarzelle, Fotodioden und einer Batterie, eine im Visier befindliche Flüssigkristallschaltfläche zum Verdunkeln bringt. Diese Durchsichteinheiten bestehen in der Regel aus durchsichtigen Glas- oder Kunststoffscheiben, ggf. auch mehrlagig, die dergestalt ausgerüstet sind, dass unter Anlegung einer Spannung diese verdunkelt oder aufgehellt werden können. Die Durchsichteinheiten können dabei mittels geeigneter Schaltungseinrichtungen so geschaltet werden, dass eine Durchsicht möglich ist oder alternativ eine Verdunkelung, und damit keine Durchsicht erfolgt. Zum allgemeinen technischen Umfeld von derartigen Durchsichteinheiten wird nur beispielhaft auf die EP 0 886 804 A1, WO 96/003475 A1, EP 0 622 660 A1 oder EP 0 735 408 A1 verwiesen.

Das Problem dieser Technologien besteht jedoch darin, dass auch hierbei das ganze Blickfeld verdunkelt wird und man beispielsweise seine Umgebung nicht im verdunkelten Modus der Schweißbrille sehen kann. Außerdem muss eine Batterie eingesetzt werden, die die Elektronik permanent mit Energie versorgt. Zudem sind derartige Durchsichteinheiten mit ihren Komponenten sehr schwer und groß und können daher nicht in einer kleinen Brille verbaut werden.

Auch wurde vom KIT eine Solar-Brille entwickelt, mit einer auf dem Brillenglas montierten semitransparenten organischen Solarzelle, die eine Spannung produziert, wenn sich die Solar-Brille in hell beleuchteten Räumen oder in der Sonne befindet. Diese Spannung betreibt zwei Flüssigkristall Displays, die bestimmte Messwerte anzeigen können (https://www.kit.edu/kit/pi_2017_093_solar-brille-erzeugt-sonnenstrom.php, 11.17, Karlsruher Institut für Technologie, Solarbrille erzeugt Solarstrom, Pressemitteilung über die Solarbrille). Jedoch ist diese Technologie nicht für eine stufenlose helligkeitsgesteuerte progressive und richtungsabhängige Verdunklung des einfallenden Lichtes vorgesehen.

Zusammenfassend wurde in den bisher entwickelten Geräten wie Schweißbrillen, Sonnenbrillen, Solarbrillen, Visieren und dergl. das Problem des Geblendet-Werdens, nicht weit genug gelöst.

Aus der US 2008/225402 A1 ist eine Vorrichtung zur Anpassung des einfallenden Lichts bekannt, die einen Grundkörper sowie Verdunklungskomponenten umfasst, welche einfallendes Licht anpassen, wobei der Grundkörper aus Zellen gebildet ist, denen mindestens eine Verdunklungskomponente oder ein Bereich einer Verdunklungskomponente zugewiesen ist und die aufgefächert sind, wobei der Grundkörper aus Zellen gebildet ist.

Aus der US 5 412 439 A ist ein Visier oder eine Windschutzscheibe bekannt, welche jeweils mit einer ersten Schicht von Photosensorsegmenten ausgestattet und optisch mit entsprechenden lichtblockierenden Segmenten in Form von LCD-Material oder photorefraktivem Glas ausgerichtet ist. Überall dort, wo Licht auf Photosensorelemente trifft, werden bei Werten oberhalb eines vorgewählten Schwellenwerts die entsprechenden lichtblockierenden Segmente in einen Lichtblockiermodus geschaltet.

Aus der DE 33 28 436 A1 ist eine Blendschutzbrille mit einem in einem Brillengestell befestigten dem Sehwinkelbereich der Augen vollständig bedeckenden und bezüglich ihrer Lage unabhängig voneinander einstellbaren Paar Brillengläser bekannt, wobei die Fläche jedes der Brillengläser aus Flüssigkristallzellen gebildet wird und zur separaten Ansteuerung der einzelnen Flüssigkristallzellen Ansteuerungseinheiten vorhanden sind und dass eine Anzahl von lichtempfindlichen Bauelementen, die elektrisch mit den Ansteuerungseinheiten verbunden sind, so an Teilen der Blendschutzbrille angeordnet ist, dass die lichtempfindlichen Bauelemente in ihrer Gesamtheit den Sehwinkelberich der Augen zugeordnet sind, indem jedes lichtempfindliche Bauelement auf einen bestimmten Teilbereich des Sehwinkelbereiches der Augen eingestellt ist.

Aus der EP 1 760 515 A2 ist eine Vorrichtung zur Verbesserung der Sicht eines Benutzers bekannt, die eine Fokusmodulationsvorrichtung beinhaltet, die angepasst ist, um Licht von Objekten in einem Sichtfeld des Benutzers auf die Netzhaut zu lassen, während abwechselnd zwischen mindestens einem ersten und einem zweiten Fokuszustand gewechselt wird, wobei unterschiedliche Fokussierungen vorgesehen sind.

### Darstellung der Erfindung

Der vorliegenden Erfindung liegt die Aufgabe zugrunde, eine Vorrichtung zu schaffen, die gezielt die Helligkeit einfallenden Lichtes in einem definierten Bereich des Sichtfeldes anpasst, wobei das restliche Sichtfeld dennoch gut zu erkennen bleibt.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Vorrichtung sind in den abhängigen Unteransprüchen angegeben.

Die vorliegende Vorrichtung sieht einen Grundkörper mit Verdunklungskomponenten vor, welche einfallendes Licht anpassen, wobei der Grundkörper aus Zellen gebildet ist, denen mindestens eine Verdunklungskomponente oder ein Bereich einer Verdunklungskomponente zugewiesen ist und die in definierten Winkeln aufgefächert sind.

Erfindungsgemäß ist diese Vorrichtung der Gestalt, dass die Zellen wabenförmig ausgebildet und in den definierten Winkeln derart aufgefächert sind, dass sie konzentrisch auf einen gemeinsamen Punkt und somit auf einen gemeinsamen Bereich gerichtet sind.

Als Verdunklungskomponente sei vorliegend jegliche Einrichtung verstanden, die geeignet ist, einfallendes Licht zu verdunkeln, ein Durchdringen des Lichts durch eine Zelle gänzlich oder teilweise zu verhindern oder gar zu reflektieren. Es sind unterschiedliche Ausführungen für eine derartige Verdunklungskomponente denkbar, welche sich grundsätzlich an bekannten Maßnahmen orientieren kann. Beispielhafte Ausführungen können elektrisch, mechanisch, chemisch, etc. betrieben werden und umfassen Flüssigkristalle, Lamellen oder phototrope Materialien, wobei diese Ausführungsbeispiele keinesfalls abschließend sind.

Um eine möglichst hohe Lichtausbeute zu erreichen, sind die Zellen konzentrisch auf einen gemeinsamen Punkt und somit auf einen gemeinsamen Bereich gerichtet, wobei es ganz besonders vorteilhaft ist, die Zellen trapezförmig auszubilden, vorzugsweise in der Weise, dass die Wandungen der Zellen jeweils an den Wandungen der benachbarten Zellen anliegen. Die zuletzt genannte Ausführung wird durch eine wabenförmige und somit sechseckige Ausbildung der Zellen in ihrem Querschnitt erreicht.

Dabei ist es weiterhin ganz besonders vorteilhaft, dass jede einzelne Zelle unabhängig und vollständig autark verdunkelt wird.

Eine weitere vorteilhafte Ausführungsform der Erfindung sieht vor, dass der Mittelpunkt auf dem aufnehmenden Objekt (z.B. Auge) oder Sensor liegt und dabei so dimensioniert ist, dass sich auch bei leichter Bewegung des aufnehmenden Objektes oder Sensors dennoch ein komplettes Bild konstruieren kann. Als Mittelpunkt wird dabei der Punkt verstanden, in dem sich alle gedachten rückwärtigen Verlängerungen der Zellen treffen.

Am konkreten Beispiel der Verwendung der vorliegenden Erfindung als Schutzbrille wird damit erreicht, dass der Träger der Schutzbrille völlig risikofrei in eine das Auge schädigende Lichtquelle (bspw. in die Sonnen- oder Schweißstrahlung) blicken kann, wobei das beim Auge noch ankommende Licht mittels der Verdunklungskomponenten soweit in der Helligkeit nivelliert wird, dass dennoch die Betrachtung der gesamten Umgebung ermöglicht ist. Die Sonne würde beispielsweise stark, die restliche Umgebung leicht abgedunkelt, so dass der Träger außerhalb der direkten Lichteinstrahlung der Sonne bspw. das im Schatten liegende Umfeld ohne Abdunklung betrachten kann. Das vorgenannte Beispiel lässt sich selbstverständlich gleichermaßen auf die Verwendung von Objektiven etc. übertragen. Auch wenn der Träger den Kopf schnell zur Seite dreht, wandern die verdunkelten bzw. hellen Stellen auf der Sonnenbrille quasi mit, so dass dieser nicht geblendet werden kann und seine Umgebung weiterhin normal betrachten kann.

Die Ausbildung der Zellen ist erfindungsgemäß für jeden Anwendungsbereich entsprechend geeignet zu konfektionieren, sodass die Verdunklung den gewünschten Effekt bietet. Längere Zellen verhindern bspw. Seiteneinstrahlungen von benachbarten Bildsektoren und grenzen damit den beeinflussten Raumwinkel stärker ein. Das Verhältnis von der Zellen-Diagonale zu Länge der Einzelzelle liegt daher erfindungsgemäß zwischen 1:3 und 1:100.

Die Oberfläche des Grundkörpers bzw. der Zellen sollte möglichst wenig Spiegelung zulassen und ist in einer vorteilhaften Ausführungsform der Erfindung hierzu vorzugsweise matt schwarz ausgebildet.

In einer weiteren ganz besonders vorteilhaften Ausführungsform der Erfindung ist jeder Verdunklungskomponente vorzugsweise mindestens eine Energieversorgungseinheit zugeordnet, wobei die Energieversorgungseinheit vorteilhafterweise eine transparente Solarzelle ist. Als besonders geeignet erweisen sich hierbei semi-transparente organische Solarzellen eine Aufnahme vorgesehen. Bei dieser Anordnung verläuft die Blickachse sowohl durch die Solarzelle als auch die verdunkelnde Schicht der Verdunklungskomponente, z.B. ein Flüssigkristall. Hierfür müssen alle Komponenten im umgeschalteten Zustand die größtmögliche Transparenz aufweisen.

Die Solarzelle sollte (von außen aus gesehen) vorzugsweise vor der verdunkelnden Schicht liegen. Die Transparenz der Solarzelle ist üblicherweise eine Funktion der Dicke und sie ist umgekehrt proportional zur Energieausbeute. Die Parameter der Solarzelle sind dabei so zu wählen, dass 1.) Material und Dicke im unbeleuchteten Zustand die größtmögliche Transparenz zulassen und 2.) bei Lichtstärken über dem - vorher als vertretbar festgelegten - Wert hinreichend viel Spannung MPP V (Volt) abgeben, dass eine ausreichende Verdunklung eintritt.

Die Komponenten, die für die Verdunklung verantwortlich sind, liegen vorteilhafterweise im unteren bzw. näher zum Auge oder Objekt befindlichem Bereich jeder Zelle. Hierdurch wird das Fehlschalten von Streulicht vermieden, weil nur die Zellen sich verdunkeln sollten, bei denen der Lichteinfall aus der störenden Quelle mehr oder weniger senkrecht in die Öffnung der Zelle fällt.

Die Verdunklung erfolgt vorzugsweise mit einer FlüssigkristallSchaltfläche, die das Licht mit Hilfe von Polarisationsfiltern blockieren oder durchlassen kann.

Gesteuert wird diese helligkeitsabhängige Schaltung in diesem Ausführungsbeispiel automatisch von der vorteilhafterweise darüber liegenden semitransparenten organischen Solarzelle. Die Solarzelle produziert eine Spannung in Abhängigkeit der Intensität des einfallenden Lichtes. So würde bei Dunkelheit eine geringe Spannung und bei Sonneneinstrahlung eine wesentlich höhere Spannung produziert werden. Die Solarzelle übernimmt dabei vorteilhafterweise die Funktion einer zentralen Schaltung oder Steuerung, da die produzierte Spannung eine Funktion der Intensität des einfallenden Lichtes ist. Somit wird im Endeffekt eine Abdunklung als Funktion des einfallenden Lichtes erzielt.

Darüber hinaus kann das System in einer weiteren Ausführung auch zentral geschaltet werden, um die Sensitivität der Verdunklung einstellen zu können.

### Kurzbeschreibung der Zeichnungen

Weitere Ziele, Merkmale, Vorteile und Anwendungsmöglichkeiten der erfindungsgemäßen Vorrichtung ergeben sich aus der nachfolgenden Beschreibung von Ausführungsbeispielen anhand der Zeichnungen.

In den Zeichnungen zeigen
Fig. 1 einen bildlichen Querschnitt der Vorrichtung mit einer Darstellung der Mittelpunkt-Platzierung eines konzentrisch verlaufenden Wabengitters;
Fig. 2 die Zellenstruktur der Vorrichtung in einer schematischen und perspektivischen Ansicht;
Fig. 3 den schematischen Aufbau einer Zelle in einer beispielhaften Ausführungsform.

### Ausführung der Erfindung

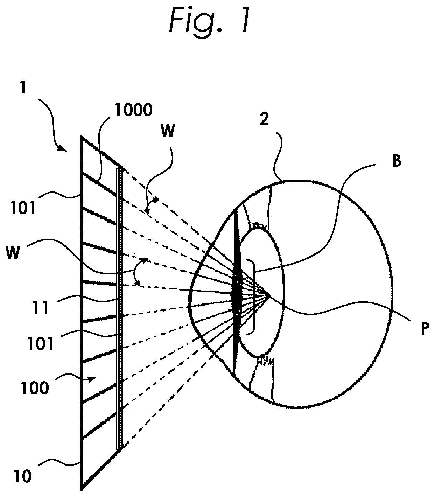

Wie aus Fig. 1 ersichtlich, umfasst die erfindungsgemäße Vorrichtung 1 einen Grundkörper 10, der aus wabenförmig angeordneten Zellen 100 gebildet ist, wobei jeder Zelle 100 eine vorzugsweise autarke Verdunklungskomponente 11 zugewiesen ist, welche einfallendes Licht verdunkelt. Die einzelnen Zellen 100 sind in definierten Winkeln W derart aufgefächert, dass sie konzentrisch auf einen gemeinsamen Punkt P gerichtet sind, der in dieser Ausführung im Auge 2 des Trägers der Vorrichtung liegt.

Wie aus Fig. 1 ebenfalls ersichtlich, nimmt die Hüllkurve des durch die Zellen 100 gebildeten Grundkörpers 10 eine plane oder gewölbte oder der Oberfläche eines aufzunehmenden Objektes oder Sensors angepasste Form ein. Die Wandungen 1000 der Zellen 100 sind hierbei besonders bevorzugt - zumindest innenseitig - planar ausgebildet und liegen an den Wandungen 1000 der benachbarten Zellen 100 plan an, wobei es selbstverständlich auch denkbar ist, dass die Wandungen 1000 benachbarten Zellen durch eine gemeinsame Wand 1000 gebildet werden.

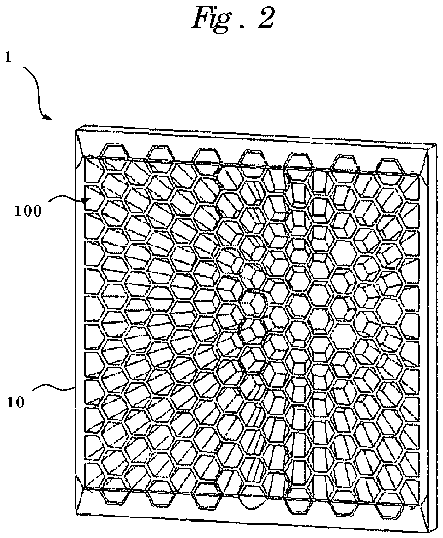

Wie aus Fig. 2 ersichtlich, besteht eine beispielhaft dargestellte vergrößerte Ausführung der erfindungsgemäßen Vorrichtung 1 aus einem wabenähnlichen Grundkörper 10, welcher aus um 0,67° auffächernden Zellen 100 in Form von Sechskantröhrchen gebildet ist, die jeweils einen Durchmesser von 200 µm und eine Wandstärke von ungefähr 10 µm aufweisen (Material abhängig). Diese Werte können in jegliche denkbare Größe skaliert werden und der Durchmesser vorzugsweise nicht unter 10 µm fällt. Damit keine ungewollten Reflektionen entstehen, bestehen die Zellen 100 vorteilhafterweise aus einem matten schwarzen Material. Die Zellen 100 sind in diesem Ausführungsbeispiel außerdem auf einer geraden Fläche angeordnet und fest miteinander verbunden. Dabei sind sie so ausgerichtet, dass jede Zelle 100 einen Teil des Blickfeldes durchlässt und diese auf einem gemeinsamen Fokus gerichtet sind, so dass der durchgelassene Lichtkegel immer das komplette Auge oder Objektiv beleuchtet. Hierfür muss der Lichtkegel jeder Zelle 100 auf das in Fig. 1 dargestellte Auge fallen. Dabei muss auch beachtet werden, dass die Pupille bei Dunkelheit eine größere Dilatation aufweist und dass man das Auge ständig unwillkürlich bewegt. Mit diesen Einstellungen kann der Träger beim Blicken durch die Vorrichtung 1 alle Zelle 100 gleichzeitig nutzen (bei einem angenommenen Sehwinkel von 120°) und seine ganze Umgebung wahrnehmen. Wenn die Vorrichtung in dieser Ausführung auf eine Brille anpasst ist, würden ungefähr 2500 Zellen 100 eine Fläche von 1 cm² belegen.

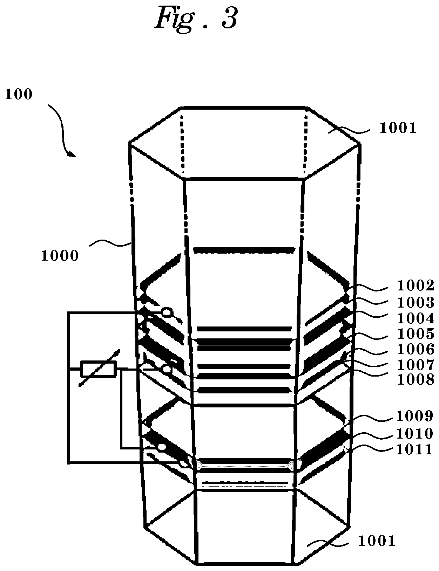

Wie aus Fig. 3 ersichtlich, umfasst jede einzelne Zelle 100 vorzugsweise einen Aufbau, der sich aus mehreren Komponenten zusammensetzt. In diesem Ausführungsbeispiel wird (in dieser Reihenfolge) eine Zelle 100 gebildet aus einer oberen sowie einer unteren das Zelleinnere abdeckenden Kunststoffschutzschicht 1001, einer Kunststoff Verkapselung 1002, einer Silberleitschicht (Kathode) 1003, einem MoO3 Lochtransporter 1004, einer Photoaktive Schicht 1005, einem ZnO Elektronentransport 1006, einer ITO Leitschicht 1007, einer Polarisationsfolie 1008, einem Trägermaterial 1009 (Kunststoff), einer Flüssigkristallschaltfläche 1010 sowie einer Polarisationsfolie 1011.

Die erfindungsgemäße Vorrichtung 1 beschränkt sich in ihrer Ausführung nicht auf die vorstehend angegebenen bevorzugten Ausführungsformen. Vielmehr sind eine Vielzahl von Ausgestaltungsvariationen denkbar, welche innerhalb des durch die Patentansprüche definierten Schutzumfangs liegen.

### Liste der Bezugsziffern

- 1: Vorrichtung
- 2: Auge
- 10: Grundkörper
- 11: Verdunklungskomponente
- 100: Zelle/n
- 1000: Wandungen
- 1001: Kunststoffschutzschicht
- 1002: Kunststoff-Verkapselung
- 1003: Silberleitschicht (Kathode)
- 1004: MoO3 Lochtransporter
- 1005: Photoaktive Schicht
- 1006: ZnO Elektronentransport
- 1007: ITO Leitschicht
- 1008: Polarisationsfolie
- 1009: Trägermaterial (Kunststoff)
- 1010: Flüssigkristallschaltfläche
- 1011: Polarisationsfolie
- B: Bereich
- P: Punkt
- W: Winkel

## Patentansprüche

1. Vorrichtung (1) zur richtungsabhängigen Anpassung der Helligkeit des einfallenden Lichts, mit einem Grundkörper (10), der Verdunklungskomponenten (11) umfasst, welche geeignet sind, die Helligkeit des einfallendes Licht anzupassen, wobei der Grundkörper (10) aus wabenförmig ausgebildeten Zellen (100) mit sich jeweils gegenüberliegenden Wandungen (1000) gebildet ist, denen (100) mindestens eine Verdunklungskomponente (11) oder ein Bereich einer Verdunklungskomponente (11) zugewiesen ist und die in definierten Winkeln (W) auffächernd konzentrisch auf einen gemeinsamen Punkt (P) und somit auf einen gemeinsamen Bereich (B) gerichtet sind, wobei die Hüllkurve des durch die Zellen (100) gebildeten Grundkörpers (10) eine plane oder gewölbte oder der Oberfläche eines aufzunehmenden Objektes oder Sensors angepasste Form einnimmt, **dadurch gekennzeichnet, dass**
das Verhältnis von der Zellen-Diagonale zu Länge der Einzelzelle zwischen 1:3 und 1:100 liegt.

2. Vorrichtung (1) nach Anspruch 1,
wobei jeder Verdunklungskomponente (11) mindestens eine Energieversorgungseinheit zugeordnet ist.

3. Vorrichtung (1) nach Anspruch 2,
wobei die Energieversorgungseinheit eine transparente Solarzelle ist.

4. Vorrichtung (1) nach einem der vorangegangenen Ansprüche, wobei jeder Verdunklungskomponente (11) eine Steuerungs- und/oder Schaltungseinheit zugerordnet ist.

5. Vorrichtung (1) nach einem der vorangegangenen Ansprüche, wobei der gemeinsame Punkt (P) oder der gemeinsame Bereich (B) im oder auf dem aufnehmenenden Objekt, z. B. Auge, liegt und die Verdunklungskomponenten im näher zum aufnehmenden Objekt befindlichem Bereich jeder Zelle liegen.

6. Vorrichtung (1) nach einem der vorangegangenen Ansprüche, wobei die Oberfläche des Grundkörpers (10) oder der Zellen (100) zum Erhalt einer möglichst geringen Spiegelung matt schwarz ausgebildet ist.

## Claims

1. Device (1) for the direction-dependent adaptation of the brightness of the incident light, having a basic body (10) which comprises darkening components (11) which are suitable for adapting the brightness of the incident light, the basic body (10) being formed from cells (100) which are of honeycomb design and have walls (1000) which are in each case opposite one another, to which (100) at least one darkening component (11) or a region of a darkening component (11) is assigned and which are directed concentrically, fanning out at defined angles (W), to a common point (P) and thus to a common region (B), the envelope curve of the basic body (10) formed by the cells (100) assuming a plane or curved shape or a shape adapted to the surface of an object or sensor to be recorded,
**characterised in that**
the ratio of the cell diagonal to the length of the individual cell is between 1:3 and 1:100.

2. Device (1) according to claim 1,
wherein at least one power supply unit is associated with each darkening component (11).

3. Device (1) according to claim 2,
wherein the power supply unit is a transparent solar cell.

4. Device (1) according to any of the preceding claims,
wherein control and/or circuit unit is associated with each darkening component (11).

5. Device (1) according to any of the preceding claims,
wherein the common point (P) or common area (B) is in or on the receiving object, e.g. eye, and the obscuration components are in the area of each cell closer to the receiving object.

6. Device (1) according to one of the preceding claims, wherein the surface of the base body (10) or the cells (100) is made matt black to obtain the lowest possible reflection.

## Revendications

1. Dispositif (1) pour adapter la luminosité de la lumière incidente en fonction de la direction, avec un corps de base (10) qui comprend des composants d'obscurcissement (11) qui sont appropriés pour adapter la luminosité de la lumière incidente, le corps de base (10) étant formé de cellules (100) réalisées en forme de nid d'abeilles avec des parois (1000) respectivement opposées, au moins une composante d'obscurcissement (11) ou une zone d'une composante d'obscurcissement (11) est attribuée à ces cellules (100) et celles-ci sont orientées en éventail selon des angles définis (W) de manière concentrique sur un point commun (P) et donc sur une zone commune (B), l'enveloppe du corps de base (10) formé par les cellules (100) prenant une forme plane ou bombée ou adaptée à la surface d'un objet ou capteur à enregistrer,
**caractérisé en ce que**
le rapport entre la diagonale de la cellule et la longueur de la cellule individuelle est compris entre 1:3 et 1:100.

2. Dispositif (1) selon la revendication 1,
au moins une unité d'alimentation en énergie étant associée à chaque composant d'obscurcissement (11).

3. Dispositif (1) selon la revendication 2,
l'unité d'alimentation en énergie étant une cellule solaire transparente.

4. Dispositif (1) selon l'une quelconque des revendications précédentes,
une unité de commande et/ou de commutation étant associée à chaque composant d'obscurcissement (11).

5. Dispositif (1) selon l'une quelconque des revendications précédentes,
dans lequel le point commun (P) ou la zone commune (B) se trouve dans ou sur l'objet récepteur, par exemple l'oeil, et les composants d'obscurcissement se trouvent dans la zone de chaque cellule la plus proche de l'objet récepteur.

6. Dispositif (1) selon l'une des revendications précédentes, dans lequel la surface du corps de base (10) ou des cellules (100) est de couleur noire mate afin d'obtenir un minimum de reflets.
